# EUROPÄISCHE PATENTSCHRIFT

(11) **EP 0 707 735 B1**
(45) Veröffentlichungstag und Bekanntmachung des Hinweises auf die Patenterteilung: **05.03.1997**
(21) Anmeldenummer: 94918749.6
(22) Anmeldetag: 27.06.1994
(51) Int. Cl.: G07F 17/30, G11B 27/00

(54) **MUSIKSPIELAUTOMAT**
JUKE-BOX
JUKE-BOX

(30) Priorität: 06.07.1993 DE 4322441
(43) Veröffentlichungstag der Anmeldung: 24.04.1996
(73) Patentinhaber: NSM AKTIENGESELLSCHAFT, 55411 Bingen (DE)
(72) Erfinder: FRANK, Armin, D-78087 Mönchweiler (DE)
(74) Vertreter: Becker, Bernd, Dipl.-Ing.
(86) Internationale Anmeldenummer: DE9400745
(87) Internationale Veröffentlichungsnummer: WO9502228

(56) Entgegenhaltungen:
- WO-A-86/01326
- WO-A-91/10217
- DE-A- 2 605 999
- GB-A- 2 240 869

## Beschreibung

Die Erfindung betrifft einen Musikspielautomaten mit mindestens einer Abspieleinheit zum Spielen von Musikstücken, mindestens einem Lautsprecher, einem Archiv mit abrufbaren Musikstücken, einer Eingabe- und/oder Bedieneinheit einschließlich einer Auswahleinheit zum Auswählen eines gewünschten Musiktitels, einer Anzeige, einer Geldannahmeeinheit, einer Sender/Empfängereinheit und einem Rechner, wobei der Musikspielautomat mit einer Fernbedienung, mindestens einem Terminal versehen ist, das eine Anzeige, eine Auswahleinheit, eine Geldannahmeeinheit und eine Sender/Empfängereinheit aufweist.

Musikspielautomaten sind z.B. in Restaurants oder auch Kinovorräumen aufgestellt, die heutzutage oft als Bistros ausgestaltet sind.

Gegen Zahlung eines bestimmten Geldbetrages werden ausgewählte Musiktitel abgespielt. Die Zahlung kann durch Münzeinwurf oder durch Abbuchung von Karten, z.B. ähnlich wie bei Telefonkarten, erfolgen und gibt die Betätigung einer Bedien- bzw. Eingabeeinheit frei. Mittels der Bedieneinheit können in einem Archiv gespeicherte Musikstücke zur Anzeige gebracht und anschließend ausgewählt werden. Nach der Auswahl werden die Musikstücke mittels einer Abspieleinheit abgespielt. Für die Steuerung des Musikspielautomaten ist vielfach ein Rechner vorgesehen.

Vorzugsweise sind Musikautomaten zentral und für jedermann gut erreichbar aufgestellt. Aus Raumgründen kann es sich indessen ergeben, daß ein Musikspielautomat an einer Stelle aufgestellt ist, die von dem sonstigen Aufenthaltsort der Benutzer weiter entfernt ist. Soll ein neues Musikstück ausgewählt oder ein Programm fürs Abspielen zu sammengestellt werden, muß des öfteren ein anderer Raum aufgesucht werden. Dies wird als nachteilig empfunden.

Aus der GB-A-2 240 869 ist ein Musikautomat mit einer in einem Gehäuse untergebrachten Haupteinheit bekannt, die eine Auswahl- und Abspieleinheit für CD-Platten, eine Verstärker und eine damit verbundene Steuereinheit umfaßt. Die Haupteinheit ist mit einer entfernt angeordneten, als Fernbedienung ausgebildeten Wandbox und einem Lautsprecher verbunden. Die Wandbox enthält eine Anzeige, eine Münzverarbeitung, Auswahltasten und eine damit verbundene Steuereinheit. Da die Haupteinheit keine Eingabe- und Geldannahmeeinheit enthält, muß zur Bedienung des Musikautomaten stets die Wandbox aufgesucht werden.

Der Erfindung liegt die Aufgabe zugrunde, einen Musikspielautomaten zu schaffen, der einfach und bequem bedienbar ist.

Diese Aufgabe ist bei einem Musikspielautomaten mit den Merkmalen des Anspruchs 1 gelöst. Vorteilhafte Ausgestaltungen des erfindungsgemäßen Musikspielautomaten sind in den Unteransprüchen angegeben.

Ein erfindungsgemäßer Musikspielautomat umfaßt somit mindestens eine Abspieleinheit zum Spielen von Musikstücken, mindestens einen Lautsprecher sowie ein Archiv mit abrufbaren Musikstücken. Eine Eingabe- und/oder Bedieneinheit einschließlich einer Auswahleinheit dient zum Auswählen eines Gewünschten Musiktitels. Es ist ferner eine Anzeige vorgesehen. Eine Einheit dient zur Geldannahme und -verarbeitung, einschließlich Karten. Schließlich umfaßt der Musikspielautomat einen Rechner. Der Musikautomat ist mit einer Fernbedienung, umfassend mindestens ein Terminal, versehen. Das Terminal weist eine Anzeige, eine Auswahleinheit und eine Einheit zur Geldannahme, gegebenenfalls einschließlich Kartenlese- und -schreibeinrichtung, sowie einen Sender und Empfänger auf. Entsprechend weist der Musikspielautomat einen Sender und Empfänger auf.

Durch Vorsehen einer Fernbedienung mit mindestens einem Terminal für einen Musikspielautomaten, das alle zur Bedienung notwendigen Einheiten wie eine Anzeige, eine Auswahleinheit sowie eine Einheit zum Zahlen aufweist, können Bediener den Musikspielautomaten von einem Ort aus bedienen, der von dem Aufstellungsort entfernt ist. Damit entfallen die für einen bisher bekannten Musikspielautomaten auftretenden Nachteile der räumlichen Trennung von Aufstellungsort und Aufenthaltsort des Benutzers. Vorteilhaft weisen sowohl Terminals der Fernbedienung als auch der Musikspielautomat eine Sender/Empfängereinrichtung für die Übertragung der Daten zur Auswahl eines Musikstücks auf. Von dem Musikspielautomaten können die Daten der abrufbaren Musikstücke mittels der Fernbedienung angefordert und übermittelt sowie vom Terminal empfangen und angezeigt werden. Der Benutzer kann mittels des Terminal das gewünschte Musikstück auswählen und einen Auswahl- und Abspielbefehl zum Musikspielautomaten senden.

Dieser spielt dann die ausgewählten Musikstücke ab. Durch Vorsehen mehrerer Terminals kann es ermöglicht werden, daß mehrere Bediener den Musikspielautomaten gleichzeitig bedienen. Dieser empfängt die verschiedenen Terminalanforderungen und speichert die betreffenden Daten. Die ausgewählten Musikstücke werden dann eines nach dem anderen bzw. nach einer Vorrang-Regel abgespielt.

Die Fernbedienung ermöglicht es, daß der Musikspielautomat nicht an einem zentralen Ort aufgestellt sein muß, was eine vorteilhafte Platzersparnis mit sich bringen kann.

Weiterhin können die Benutzer vom Terminal aus die Bedienung vornehmen. So kann in einem Restaurant die Fernbedienung beispielsweise direkt am Tisch vorgesehen sein. Auf diese Weise kann ein Musikstück anonym vom Platz aus ausgewählt werden und der Benutzer kann sich ansonsten z.B. weiterhin unterhalten, ohne die Tischrunde zu verlassen.

Die Anzeige des Terminals ist vorzugsweise eine alphanumerische Anzeige und/oder kann eine LED-Anzeige sein. Es kann auch eine zentrale Terminalanzeige vorgesehen sein, z.B. an der Wand eines Gemeinschaftsraums oder dergleichen. Eine solche zentrale Anzeige zeigt z.B. den Titel des gerade abgespielten Musikstücks an, was für eine Anzahl von Hörern interessant sein kann. Weiterhin kann eine Bildanzeige vorgesehen sein, die beispielsweise ein Cover einer gerade abgespielten CD darstellt.

Vorteilhaft ist es auch, wenn ein Drucker, insbesondere ein Terminaldrucker, vorgesehen ist, der eine Anzahl von auszuwählenden bzw. ausgewählten Titeln ausdruckt. Will ein Benutzer die zur Verfügung stehenden Musikstücke wissen und auch z.B. neue Stücke feststellen, so kann er sich praktisch eine Musikmenue-Karte ausdrucken lassen und dann die gewünschten Musikstücke bequem auswählen.

Die Auswahleinheit erfaßt vorzugsweise mehrere Auswahlparameter, z.B. Titel, Interpreten oder Kategorie von Musikstücken. Zur Bedienung sind vorzugsweise Selektionsknöpfe und/oder eine stufenlose Suchlauftaste, insbesondere Wippe, vorgesehen.

Bei einem bevorzugten Ausführungsbeispiel der Erfindung ist ein Sensor für die Signale der Terminalsender vorgesehen. Dieser kann sich z.B. zentral oder an einer gut erreichbaren Stelle in einem Raum befinden und kann durchaus räumlich vom Musikspielautomaten getrennt sein. Hierdurch ergibt sich eine besonders große Flexibilität der Aufstellung des Musikspielautomaten. Es muß lediglich für eine geeignete Anordnung des bzw. der Lautsprecher Sorge getragen werden. Für die Fernbedienung ist zweckmäßig eine IR-Fernbedienung vorgesehen.

Weiterhin ist es vorteilhaft, die Terminals als ISDN-Terminals auszubilden, was es ermöglicht, die aus der Telefontechnik bekannte und inzwischen schon vielerorts eingesetzte Warteschlangenregulierung auch bei dem erfindungsgemäßen Musikspielautomaten einzusetzen.

Die Erfindung wird in der nachfolgenden Beschreibung eines Ausführungsbeispiels in Verbindung mit der Zeichnung weiter erläutert. Es zeigen:
- Fig. 1: ein Blockdiagramm eines erfindungsgemäßen Musikspielautomaten und
- Fig. 2: ein Blockdiagramm eines Terminals.

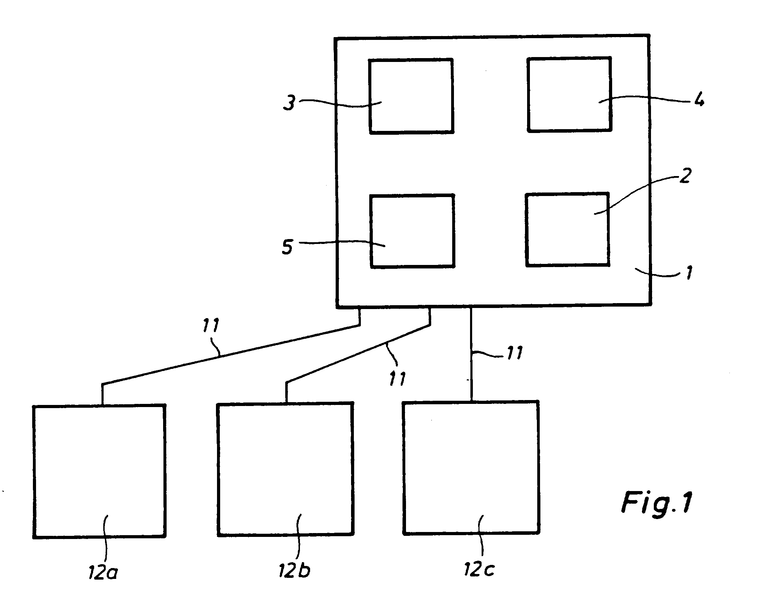

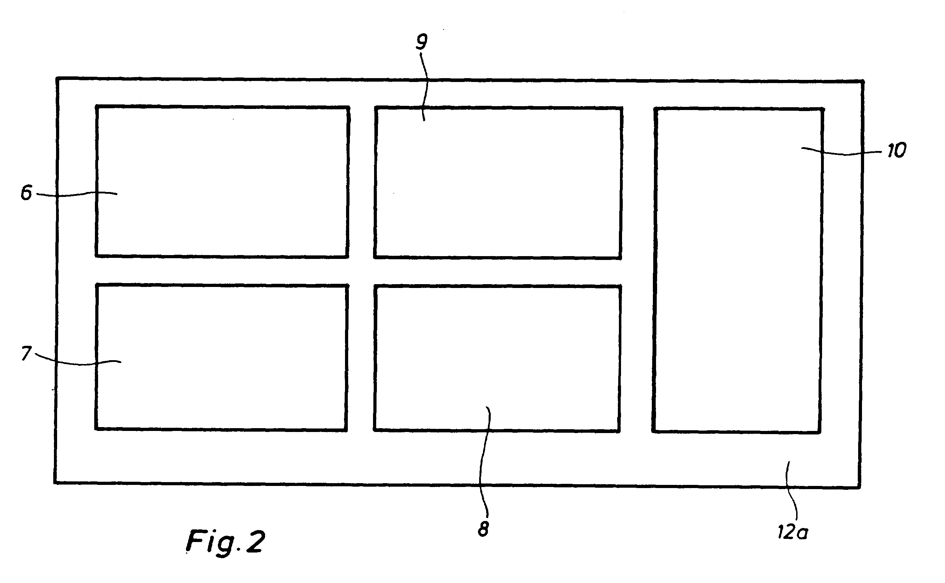

In Fig. 1 sind ein Musikspielautomat 1 und mehrere Fernbedienungen 12a, 12b, 12c, ... gezeigt, die jeweils Terminals aufweisen. Eine der Fernbedienungen ist anhand von Fig. 2 mehr im einzelnen beschrieben.

Der Musikspielautomat 1 umfaßt eine Sender/Empfängereinheit 2, eine Anzeige 3, eine Geldannahmeeinheit 4 und eine Auswahleinheit 5. Des weiteren ist ein nicht dargestelltes Archiv für abrufbereite Musikstücke vorgesehen.

Da der in Fig. 1 gezeigte Musikspielautomat 1 sämtliche Einrichtungen eines herkömmlichen Musikspielautomaten umfaßt, ist er sowohl zur Fernbedienung als auch zur direkten Bedienung geeignet.

Im folgenden wird als erstes die direkte Bedienung des Musikspielautomaten erläutert. Ein Benutzer wird durch die Anzeige 3 über die im Archiv gespeicherten Musikstücke informiert. Entschließt er sich, den Musikspielautomaten zu benutzen, muß er zunächst einen bestimmten Betrag zahlen, wozu entweder Geldstücke in die Geldannahmeeinheit 4 eingeworfen werden müssen oder durch eine entsprechende Magnet- oder Chipkarte in eine dazu vorgesehene Kartenaufnahmeeinheit in üblicher Weise eingeführt werden muß. Anschließend kann der Benutzer mittels der Auswahleinheit Musikstücke auswählen, die abgespielt werden sollen. Wählt der Bediener mehrere Musikstücke aus, werden diese der Reihe nach abgespielt. Durch Einsatz eines Rechners werden zu diesem Zweck die noch abzuspielenden Musikstücke bzw. die Titel gespeichert und später wieder ausgelesen. Während des Abspielens eines Musikstücks kann die Anzeige alphanumerisch den Titel des Musikstücks und/oder im Fall einer Bildanzeige beispielsweise ein zu dem gerade abgespielten Musikstück gehöriges Cover anzeigen.

Die Bedienung des in Fig. 1 gezeigten Musikspielautomaten 1 erfolgt aber auch vorzugsweise über die Fernbedienung 12. Dazu weist die Fernbedienung 12 mit Terminals versehene Einheiten 12a, 12b, 12c, ... auf, die jeweils mit dem Musikspielautomaten in Verbindung stehen. Die Verbindung kann durch Datenleitungen hergestellt sein, kann aber auch eine IR-Verbindung sein; sie ist in der Fig. 1 jeweils durch durchgezogene Linien 11 veranschaulicht.

Eine der Einheiten bzw. Terminals 12 und die Bedienung des Musikspielautomaten mittels der Fernbedienung werden nachfolgend anhand von Fig. 2 genauer erläutert.

Fig. 2 zeigt eine der Fernbedienungen mit Terminal mehr im einzelnen. Diese weist sämtliche zur Bedienung eines Musikspielautomaten notwendigen Einrichtungen auf: eine Anzeige 6, eine Auswahleinheit 7 und eine Geldannahmeeinheit 8. Zusätzlich ist eine Sender/Empfängereinheit 9 vorgesehen, durch die Daten zum Musikspielautomaten 1 gesendet und von diesem empfangen werden. Des weiteren ist bei der Fernbedienung 12a von Fig. 2 ein Drucker 10 vorgesehen, der durch die Anzeige 6 dargestellte oder im übrigen vom Musikspielautomaten abgerufene Daten druckt.

Da alle für die Bedienung des Musikspielautomaten 1 nötigen Einheiten auch an der Terminaleinheit 12a vorhanden sind, kann diese grundsätzlich genauso bedient werden, wie der Musikspielautomat 1 selbst. Ein Benutzer kann nach Zahlung des benötigten Geldbetrags mittels einer Geldannahmeeinheit 6 durch eine Auswahleinheit 7 Musikstücke auswählen, die durch eine Anzeige 8 oder ggf. zusätzlich die Anzeige 3 des Musikspielautomaten selbst angezeigt werden. Anders als bei der direkten Auswahl am Musikspielautomaten selbst kann der Musikspielautomat 1 durch die Fernbedienung 12 von mehreren Terminals aus gleichzeitig betätigt werden. Damit die Daten, die bei einer derartigen gleichzeitigen Bedienung des Musikspielautomaten 1 zu diesem gesendet werden, richtig, d.h. vor allem in einer richtigen Reihenfolge, verarbeitet werden können, ist es vorteilhaft, die Daten nach dem ISDN-System zu verarbeiten, das insbesondere durch Einsatz in der Fernmeldetechnik bekannt ist.

Eine Druckereinheit 10 ermöglicht es, z.B. Daten der im Musikspielautomaten archivierten Musikstücke, ferner die angezeigten oder weitere Daten für ein späteres Nachschauen auszudrucken und zu vervielfältigen.

## Patentansprüche

1. Musikspielautomat, umfassend
- mindestens eine Abspieleinheit zum Spielen von Musikstücken,
- mindestens einen Lautsprecher,
- ein Archiv mit abrufbaren Musikstücken,
- eine Eingabe- und/oder Bedieneinheit einschließlich einer Auswahleinheit (5) zum Auswählen eines gewünschten Musiktitels,
- eine Anzeige (3),
- eine Geldannahmeeinheit (4),
- eine Sender/Empfänqereinheit (2) und
- einen Rechner,
wobei der Musikspielautomat mit einer Fernbedienung, mindestens ein Terminal (12), versehen ist, das eine Anzeige (6), eine Auswahleinheit (7), eine Geldannahmeeinheit (8) und eine Sender/Empfängereinheit aufweist,
dadurch gekennzeichnet, daß das Terminal (12) derart ausgebildet ist, daß die Fernbedienung direkt von einem Tisch aus erfolgt, und daß das Terminal (12) einen Terminaldrucker (10) aufweist.

2. Musikspielautomat nach Anspruch 1, dadurch gekennzeichnet, daß die Anzeige (6) des Terminals eine alphanumerische Anzeige ist.

3. Musikspielautomat nach Anspruch 1 oder 2, dadurch gekennzeichnet, daß die Anzeige (6) des Terminals eine LED-Anzeige ist.

4. Musikspielautomat nach einem der Ansprüche 1 bis 3, dadurch gekennzeichnet, daß eine zentrale Terminalanzeige vorgesehen ist.

5. Musikspielautomat nach Anspruch 4, dadurch gekennzeichnet, daß die zentrale Anzeige den laufenden Teil anzeigt.

6. Musikspielautomat nach Anspruch 4 oder 5, dadurch gekennzeichnet, daß eine Bildanzeige vorgesehen ist.

7. Musikspielautomat nach einem der Ansprüche 1 bis 6, dadurch gekennzeichnet, daß der Terminaldrucker (10) eine Anzahl von ausgewählten Titeln ausdruckt.

8. Musikspielautomat nach einem der Ansprüche 1 bis 7, dadurch gekennzeichnet, daß die Auswahleinheit (7) mehrere Auswahlparameter erfaßt.

9. Musikspielautomat nach Anspruch 8, dadurch gekennzeichnet, daß die Auswahleinheit (7) Selektionsknöpfe aufweist.

10. Musikspielautomat nach Anspruch 8 oder 9, dadurch gekennzeichnet, daß die Auswahleinheit (7) eine stufenlose Suchlauftaste, insbesondere Wippe, aufweist.

11. Musikspielautomat nach einem der Ansprüche 1 bis 10, dadurch gekennzeichnet, daß ein zentraler Sensor für die Signale der Terminalsender vorgesehen ist.

12. Musikspielautomat nach einem der Ansprüche 1 bis 11, dadurch gekennzeichnet, daß eine IR-Fernbedienung vorgesehen ist.

## Claims

1. Juke-box, comprising
- at least one play-back unit for playing pieces of music,
- at least one loudspeaker,
- a file library containing recallable pieces of music,
- an input unit and/or control unit, including a selector unit (5) for selecting a desired title of music,
- a display (3),
- a money receiving unit (4),
- an emitter/receiver unit (2), and
- a computer,
the juke-box being provided with a remote control, at least one terminal (12), which has a display (6), a selector unit (7), a money receiving unit (8) and an emitter/receiver unit,
characterised in that the terminal (12) is so configured that the remote control is effected directly from a table, and in that the terminal (12) has a terminal printer (10).

2. Juke-box according to claim 1, characterised in that the display (6) of the terminal is an alphanumerical display.

3. Juke-box according to claim 1 or 2, characterised in that the display (6) of the terminal is an LED display.

4. Juke-box according to one of claims 1 to 3, characterised in that a central terminal display is provided.

5. Juke-box according to claim 4, characterised in that the central display indicates the moving part.

6. Juke-box according to claim 4 or 5, characterised in that a picture display is provided.

7. Juke-box according to one of claims 1 to 6, characterised in that the terminal printer (10) prints-out a number of selected titles.

8. Juke-box according to one of claims 1 to 7, characterised in that the selector unit (7) detects a plurality of selection parameters.

9. Juke-box according to claim 8, characterised in that the selector unit (7) has selection buttons.

10. Juke-box according to claim 8 or 9, characterised in that the selector unit (7) has a stepless search key, more especially a rocker.

11. Juke-box according to one of claims 1 to 10, characterised in that a central sensor is provided for the signals of the terminal emitters.

12. Juke-box according to one of claims 1 to 11, characterised in that an IR remote control is provided.

## Revendications

1. Juke-box comportant
- au moins une unité de lecture pour l'audition de morceaux de musique,
- au moins un haut-parleur,
- un archivage avec des morceaux de musique à appeler,
- une unité d'introduction et/ou de commande comprenant une unité de sélection (5) pour la sélection d'un titre de musique souhaité,
- un afficheur (3),
- une unité d'acceptation de monnaie (4),
- une unité d'émetteur/récepteur (2) et
- un ordinateur,
le juke-box étant doté d'une télécommande, au moins un terminal (12), qui comporte un afficheur (6), une unité de sélection (7), une unité d'acceptation de monnaie (8) et une unité d'émetteur/récepteur,
caractérisé en ce que le terminal (12) est conçu de manière que la télécommande s'effectue directement à partir d'une table et en ce que le terminal (12) comporte une imprimante de terminal (10).

2. Juke-box selon la revendication 1, caractérisé en ce que l'afficheur (6) du terminal est un afficheur alphanumérique.

3. Juke-box selon la revendication 1 ou 2, caractérisé en ce que l'afficheur (6) du terminal est un afficheur à LED.

4. Juke-box selon l'une des revendications 1 à 3, caractérisé en ce qu'il est prévu un afficheur de terminal central.

5. Juke-box selon la revendication 4, caractérisé en ce que l'afficheur central indique la partie en cours.

6. Juke-box selon la revendication 4 ou 5, caractérisé en ce qu'il est prévu un affichage d'images.

7. Juke-box selon l'une des revendications 1 à 6, caractérisé en ce que l'imprimante de terminal (10) imprime un nombre de titres sélectionnés.

8. Juke-box selon l'une des revendications 1 à 7, caractérisé en ce que l'unité de sélection (7) enregistre plusieurs paramètres de sélection.

9. Juke-box selon la revendication 8, caractérisé en ce que l'unité de sélection comporte des boutons de sélection.

10. Juke-box selon la revendication 8 ou 9, caractérisé en ce que l'unité de sélection (7) comporte une touche de recherche en continu, en particulier une bascule.

11. Juke-box selon l'une des revendications 1 à 10, caractérisé en ce qu'un capteur central est prévu pour les signaux des émetteurs de terminal.

12. Juke-box selon l'une des revendications 1 à 11, caractérisé en ce qu'il est prévu une télécommande à infrarouge.
